# EUROPEAN PATENT SPECIFICATION

(11) **EP 1 547 876 B1**
(45) Date of publication and mention of the grant of the patent: **14.02.2007**
(21) Application number: 04030508.8
(22) Date of filing: 22.12.2004
(51) Int. Cl.: B60R 21/16

(54) **Airbag and airbag system**
Airbag und Airbaganordnung
Coussin de sécurité gonflable et système de coussin de sécurité gonflable

(30) Priority: 25.12.2003 JP 2003430430
(43) Date of publication of application: 29.06.2005
(73) Proprietor: TAKATA CORPORATION, Minato-ku, Tokyo 106-8510 (JP)
(72) Inventor: Abe, Kazuhiro c/o Takata Corporation, Tokyo 106-8510 (JP)
(74) Representative: Vossius & Partner

(56) References cited:
- EP-A- 1 318 052
- US-A- 5 249 824
- US-A- 6 086 092
- PATENT ABSTRACTS OF JAPAN vol. 013, no. 588 (M-912), 25 December 1989 (1989-12-25) & JP 01 247242 A (TAKATA KK), 3 October 1989 (1989-10-03)

## Description

The present invention relates to an airbag mounted in a high-speed mobile unit such as a car for protecting a human body in an emergency such as a collision and an airbag system including the airbag.

Various airbag systems including a driver-seat airbag system are used to protect occupants in an emergency such as a car collision. The driver-seat airbag system includes an airbag which is formed by stitching the peripheries of the occupant-side front panel and a rear panel opposite thereto. An inflator opening for receiving the end of an inflator is provided in the center of the rear panel. The periphery of the opening is fixed to a retainer with pins or rivets. The rear panel has a vent hole for absorbing the impact of a driver who strikes against the airbag by releasing air in the airbag.

It is described in JP-A-1-247242 to provide an airbag that has an inner panel between the inflator opening in the rear panel and the front panel to partition the interior of the airbag into a central first chamber and a second chamber around it. The inner panel is substantially circular, of which the outer rim connects to the center between the center and the rim of the front panel. The inner panel has an inflator opening in the center thereof. The rim of the opening is fixed to the retainer together with the rear panel. The inner panel has communication openings that communicate the first and second chambers with each other. When the inflator is activated, the first chamber first is inflated and then the second chamber is inflated. Since gas flows from the first chamber into the second chamber through the communication openings, the second chamber completes inflation later than the first chamber.

EP-A-1 318 052 relates to an airbag according to the preamble of claim 1 which is partitioned into a first chamber disposed at the centre thereof, a second chamber surrounding the first chamber, and a gas receiving chamber by means of an inner panel and a partition panel. The peripheral edge portion of the partition panel is sewn to the inner panel, and the communication ports provided in the partition panel and the communication ports provided in the inner panel are mutually out of phase.

Accordingly, it is an object of the present invention to speed up the inflation of a second chamber of an airbag of which the interior is partitioned into a first chamber and the second chamber.

This object is achieved with the features of the claims.

An airbag according to the present invention is inflated with gas from a gas generator. The airbag includes a front panel disposed at a position adjacent to an occupant and a rear panel disposed at a position opposite to the occupant. The rims of the front panel and the rear panel are joined together. The rear panel has an opening for the gas generator in the center thereof. The interior of the airbag is partitioned into a central first chamber and a second chamber surrounding the first chamber by an inner panel. The inner panel has an opening disposed substantially concentrically with the opening of the rear panel. The rim at the end of the inner panel connects to the central part between the center and the rim of the front panel. The inner panel has communication openings at the rear end, for communicating the first chamber and the second chamber with each other. The communication openings are disposed on the extension of the issuing direction of gas from the gas generator with the airbag in an inflated state.

The rear panel has vent holes, and the inner panel has inner vent holes communicating the first chamber and the second chamber with each other.

In the airbag according to the invention, the first chamber includes guide means for guiding the gas from the gas generator into the communication openings.

An airbag system according to the invention includes an airbag and a gas generator having gas ports. At least the end of the gas generator is disposed in the airbag. The gas ports are disposed in the airbag. The airbag is the airbag according to the invention. The communication openings are disposed so as to face the gas ports of the gas generator, with the airbag in an inflated state.

In the airbag system according to the invention, the gas port is disposed in multiple positions; the communication openings are disposed on the extension of the issuing direction of gas from part of the gas ports, with the airbag in an inflated state; and the panel part of the inner panel is present on the extension of the issuing direction of gas from the remaining gas ports.

In the airbag system according to the invention upon activation of the gas generator, the first chamber and the second chamber are inflated substantially at the same time.

In this specification, "substantially at the same time" denotes that the ratio tl/t2 of time t1 from the start of the activation of the gas generator to completion of the inflation of the first chamber to time t2 to completion of the inflation of the second chamber ranges from 0.9 to 1.1.

When the first chamber and the second chamber are inflated substantially at the same time, an occupant can be received by the occupant-opposed surface of the greatly deployed airbag.

Embodiments of the present invention will be described hereinafter with reference to the drawings.

Figures 1 to 3 do not show the invention but are useful for understanding the invention.

Fig. 1 is a cross-sectional view of an airbag in a fully inflated state and an airbag system.

Fig. 2 is a cross-sectional view of the airbag in Fig. 1, showing a state halfway through inflation.

Fig. 3 is an exploded perspective view of the airbag and the airbag system of Fig. 1.

Fig. 4 is a cross-sectional view of an airbag and an airbag system according to the invention.

Fig. 5 is a developed view of a rectifier cloth of the airbag and the airbag system of Fig. 4.

Fig. 6 includes perspective views of the rectifier cloth of Fig. 5.

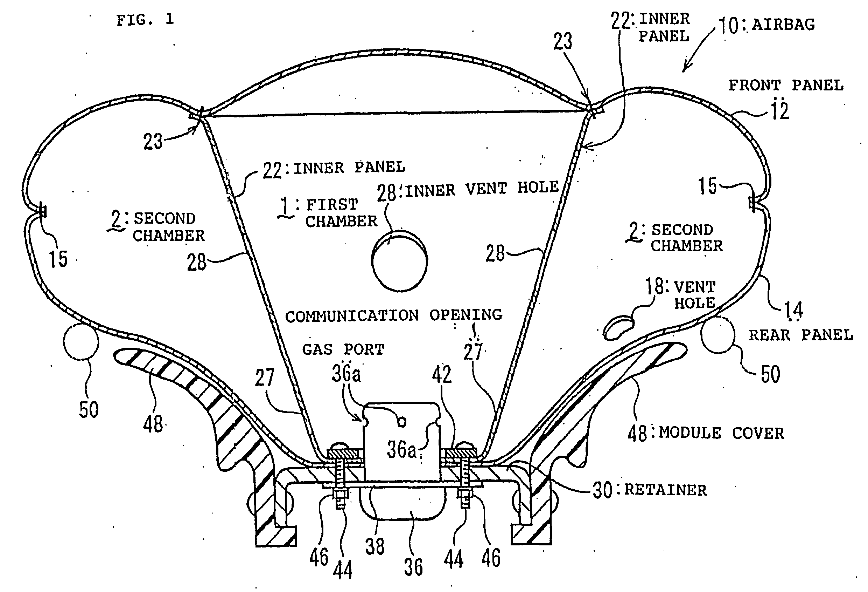

According to Figs. 1 to 3 the airbag 10 includes a front panel 12, a rear panel 14, and an inner panel 22, which are made of circular cloth. The front panel 12 and the rear panel 14 have an equal diameter, of which the outer rims are stitched together with a seam 15 made of a thread or the like into a bag shape. The stitched portion has a ring-shape extending around the outer peripheries of the front panel 12 and the rear panel 14.

The rear panel 14 has an inflator (gas generator) opening 16 and vent holes 18. The inflator opening 16 is disposed in the center of the rear panel 14. Around the inflator opening 16 are provided bolt insertion holes 20.

The inner panel 22 is provided in the airbag 10. The inner panel 22 is substantially concentric with the front panel 12 and the rear panel 14, of which the outer rim (the rim at the leading end of the inner panel 22 with the airbag 10 in an inflated state) is joined with the central part between the center and the rim of the front paneL 12 by stitching with a seam 23 made of a thread or the like. The stitched portion has a circular shape extending around the outer rim of the inner panel 22.

An inflator opening 24, which is substantially concentric with the inflator opening 16 in the rear panel 14, is disposed in the center of the inner panel 22 (at the trailing end of the inner panel 22 with the airbag 10 in an inflated state). The openings 16 and 24 have a substantially equal diameter. Around the opening 24 in the inner panel 22 are provided bolt insertion holes 26 which agree with the bolt insertion holes 20 in the rear panel 14.

The inner panel 22 also has inner vent holes 28 relatively close to the outer rim and communication openings 27 close to the inner rim.

The rim of the inflator opening 24 in the inner panel 22 is put on the rim of the inflator opening 16 in the rear panel 14 and then put on the rim of an inflator mounting hole 32 in a retainer 30. Then the rims of the inflator openings 24 and 16 are fixed to the retainer 30 via the bolt insertion holes 26 and 20. Thus the rim of the inflator opening 24 in the inner panel 22 connects to the rim of the inflator opening 16 in the rear panel 14, and the outer rim of the inner panel 22 connects to the front panel 12 with the stitched portion (seam) 23.

The interior of the airbag 10 is thus partitioned into a central first chamber 1 and a second chamber 2 which surrounds the first chamber 1 by the inner panel 22. The first chamber 1 is disposed inside the inner panel 22.

The communication openings 27 are disposed at the rear end of the first chamber 1 (adjacent to the rear panel 14). The inner vent holes 28 are disposed at the front end of the first chamber 1 (adjacent to the front panel 12). The communication openings 27 are disposed on the extension of the issuing direction of the gas from an inflator 36, which will be described later, disposed in the first chamber 1 via the inflator openings 16 and 24, or at a position that faces gas ports 36a of the inflator 36.

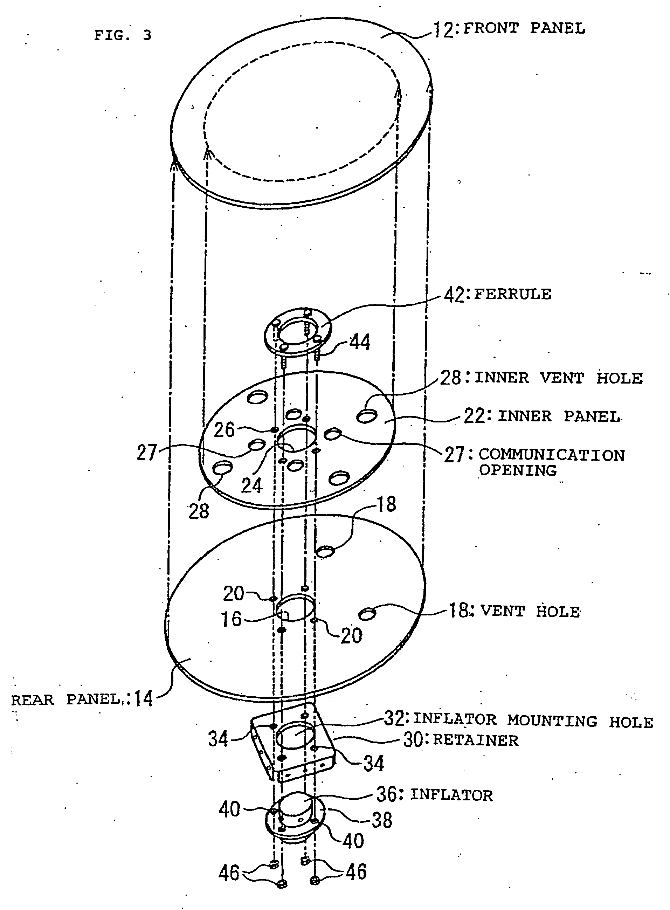

As shown in Fig. 3, the communication opening 27 and the inner vent holes 28 are disposed at four positions at equal intervals along the circumference of the airbag. The communication openings 27 and the inner vent holes 28 are out of phase with respect to the center of the airbag.

The openings 16 and 24, the communication openings 27, and the vent holes 18 and 28 may have reinforcing patches etc. at their rims.

The retainer 30 for mounting the airbag 10 has the inflator mounting hole 32 in the center and has bolt insertion holes 34 around it.

The inflator 36 is substantially cylindrical and has gas ports 36a around the side circumference at the leading end of the cylinder axis. In this embodiment, the gas ports 36a are disposed at four positions at equal intervals around the circumference of the inflator 36. The inflator 36 emits gas radially through the gas ports 36a. A flange 38 for fixing the inflator 36 projects from the side circumference halfway through the cylinder axis of the inflator 36 (at a position closer to the rear end than the gas ports 36a). The flange 38 has bolt-insertion holes 40. The leading end of the inflator 36 is fitted in the inflator mounting hole 32.

In mounting the airbag 10 to the retainer 30, the rims of the respective inflator openings 16 and 24 of the rear panel 14 and the inner panel 22 are retained to the rim of the inflator mounting hole 32 of the retainer 30 with a ferrule 42. The end of the inflator 36 fitted in the inflator mounting hole 32 is inserted into the first chamber 1 via the inflator openings 16 and 24. The gas ports 36a disposed at the end of the inflator 36 face the communication openings 27 in the inner panel 22, respectively.

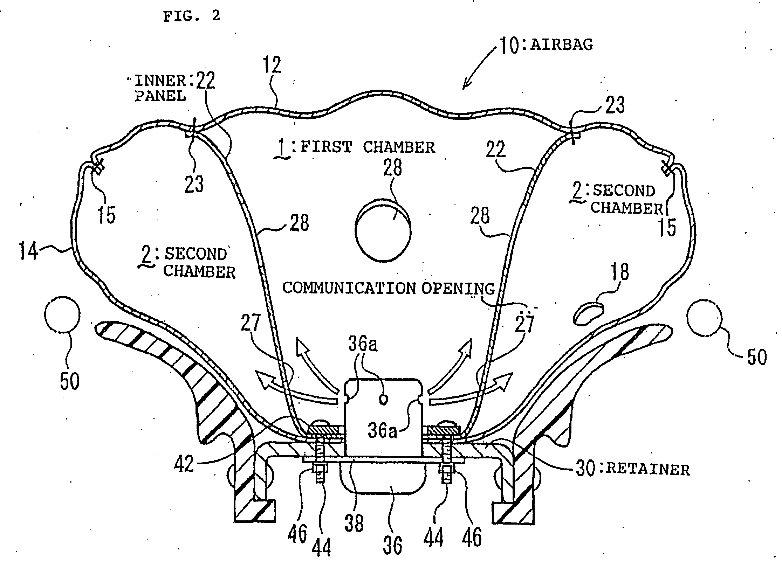

The inner panel 22, the airbag 10 (rear panel 14), and the inflator 36 are fixed to the retainer 30 by inserting stud bolts 44 of the ferrule 42 into the bolt insertion holes 26, 20, 34, and 40, and tightening nuts 46 to the ends thereof. The airbag 10 is folded and a module cover 48 is mounted to the retainer 30 so as to cover the folded airbag 10 and thus the airbag system is constructed. The airbag system is mounted to the steering wheel of a car (only a rim 50 is shown in Figs. 1 and 2).

In the event of a car collision, the inflator 36 is activated to emit a jet of gas into the airbag 10. The airbag 10 is inflated with the gas to push the module cover 48 open and deploy in the cabin, thereby protecting a driver-seat occupant.

In the airbag 10, the communication openings 27 which communicate the first chamber 1 and the second chamber 2 with each other are disposed on the extension of the issuing direction of the gas from the inflator 36 disposed in the first chamber 1, or so as to face the gas ports 36a of the inflator 36. Accordingly, upon activation of the inflator 36, the gas is issued from the inflator 36 into the communication openings 27. The gas emitted from the inflator 36 is therefore supplied directly also into the second chamber 2 through the communication openings 27, as shown in Fig. 2. Thus the second chamber 2 is inflated early.

When an occupant strikes against the inflated airbag 10, the gas in the first chamber 1 and the second chamber 2 flows out through the inner vent holes 28 or the vent holes 18 to absorb the impact.

The airbag may be constructed such that, for example, the communication openings 27 are made relatively small so that part of the gas emitted through the gas ports 36a toward the communication openings 27 strikes against the rims of the communication openings 27 to flow into the first chamber 1, so that the first chamber 1 and the second chamber 2 are inflated substantially at the same time. In that case, when the communication openings 27 are circular, the communication openings 27 may be small in diameter. Alternatively, the communication openings 27 may be elliptical, rectangular, or in any other shapes.

The foregoing embodiment is only an example. Although the embodiment includes four gas ports 36a and four communication openings 27, the invention is not limited to that. Although the embodiment has the communication openings 27 on the extension of the issuing direction of gas from all of the gas ports 36a of the inflator 36, the airbag may be constructed such that the communication openings 27 are disposed only on the extension of issuing direction of gas from part of the gas ports 36a, and the panel portion of the inner panel 22 is present on the extension of the issuing direction of gas from the remaining gas ports 36a.

The communication openings may be disposed off the extension of the issuing direction of the gas from the gas ports 36a and so do not face the gas ports 36a.

The airbag may be constructed such that only part of the gas ports 36a is used as gas ports for the second chamber 2 which face the communication openings 27, and the panel portion of the inner panel 22 is present on the extension of the issuing direction of the gas from the remaining gas ports 36a so that the remaining gas ports 36a are used as gas ports for the first chamber 1. In that case, the first chamber 1 is inflated mainly with the gas that has passed through the gas ports for the first chamber 1, while the second chamber 2 is inflated mainly with the gas that has passed through the gas ports for the second chamber 2. Accordingly, the first chamber 1 and the second chamber 2 can be inflated substantially at the same time by selecting the number or diameter of the first-chamber gas ports and the second-chamber gas ports.

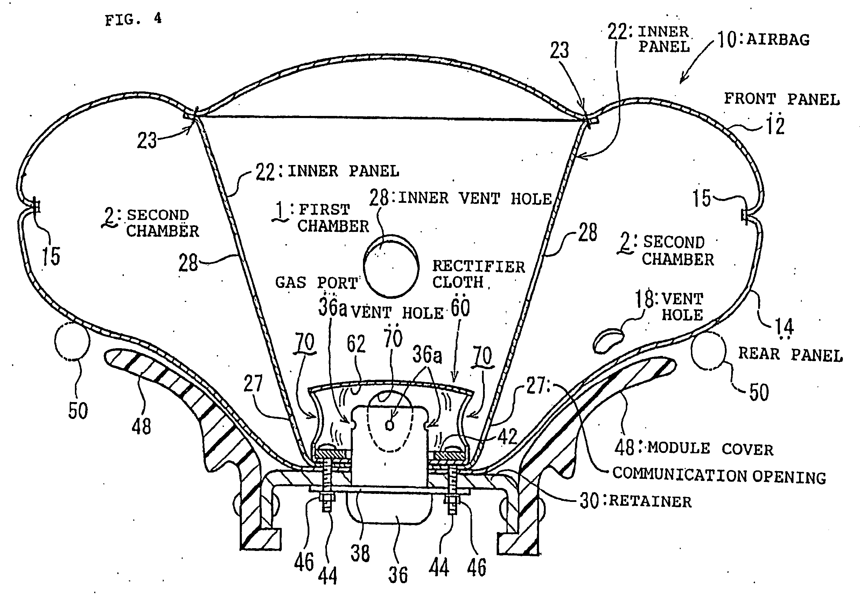

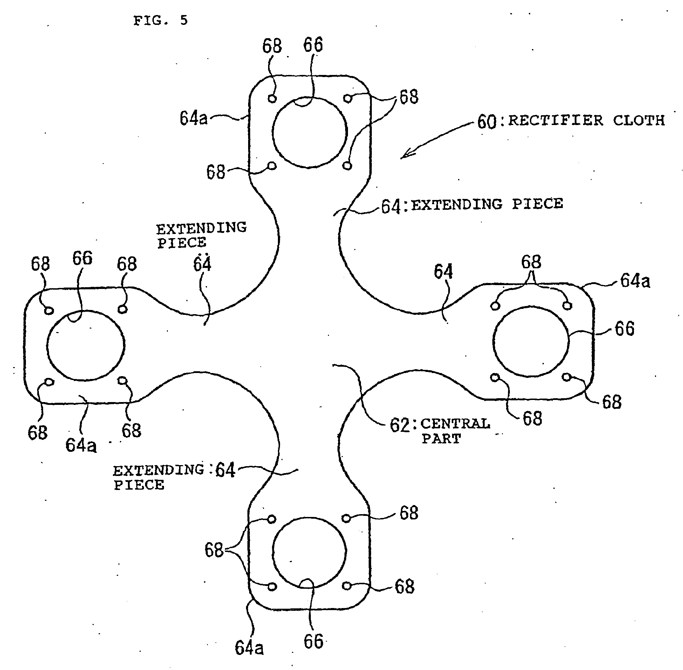

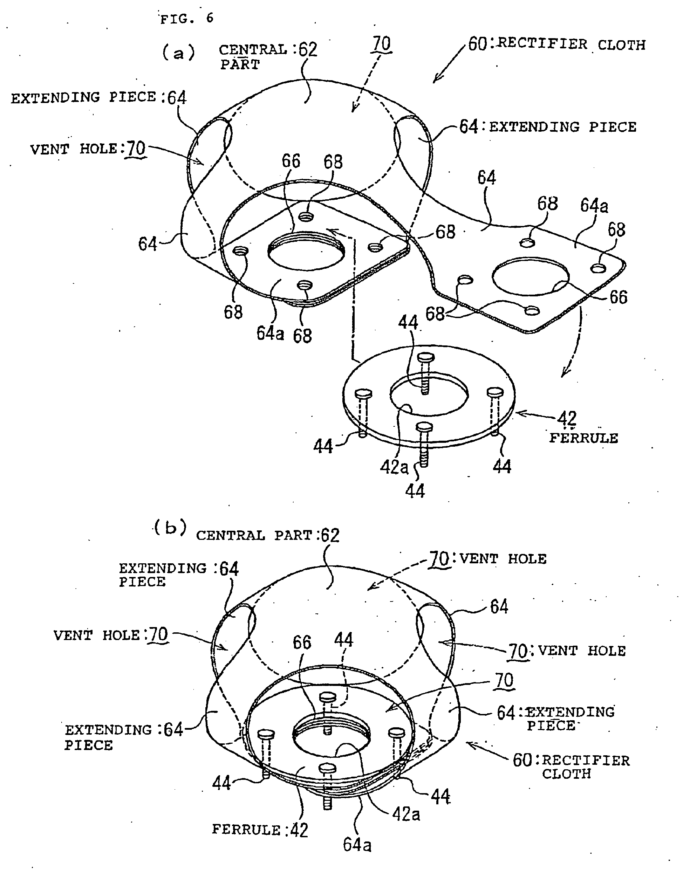

The airbag according to the present invention includes a guide means in the first chamber, for guiding the gas from the inflator into the communication openings for the first chamber 1 and the second chamber 2. Fig. 4 is a cross-sectional view of an airbag 10A including a rectifier cloth serving as the guide means in the first chamber 1 and an airbag system including the airbag 10A. Fig. 5 is a plan view (developed view) of the rectifier cloth 60 in a developed state. Fig. 6(a) is a perspective view of the rectifier cloth halfway through mounting to the ferrule. Fig. 6(b) is a perspective view of the rectifier cloth after completion of mounting to the ferrule.

The airbag 10A and the airbag system including the airbag 10A have substantially the same structure as the airbag 10 and the airbag system including the airbag 10 shown in Figs. 1 to 3, except that the first chamber 1 includes a rectifier cloth 60 as guide means for guiding the gas from the inflator 36 into the communication openings 27 for the first chamber 1 and the second chamber 2. The reference numerals in Figs. 4 to 6 being the same as those of Figs. 1 to 3 indicate the same components.

Referring to Figs. 4 and 5, the rectifier cloth 60 includes a central part 62 disposed so as to cover the end of the inflator 36 inserted into the first chamber 1 of the airbag 10A from the front (occupant side) and four extending pieces 64 extending from the central part 62 in four directions. The two adjacent extending pieces 64 intersect at right angles.
The extending pieces 64 are led to the underside of the ferrule 42 (between the ferrule 42 and the rim of the inflator opening 24 in the inner panel 22 (not shown in Fig. 4, refer to Fig. 3)). An inflator opening 66 which agrees with the central opening 42a (refer to Fig. 6) of the ferrule 42 is provided at the end 64a of each extending piece 64. Around the inflator opening 66, bolt insertion holes 68 are provided for the stud bolts 44 projecting from the lower surface of the ferrule 42 to pass through. The extending pieces 64 are retained with the ferrule 42 such that the ends 64a thereof are disposed on the underside of the ferrule 42 so that the inflator opening 66 agrees with the central opening 42a of the ferrule 42 and the stud bolts 44 of the ferrule 42 are inserted into the bolt insertion holes 68.

Referring to Fig. 6(a), in this embodiment, before the rectifier cloth 60 is mounted to the ferrule 42, three of the four extending pieces 64 are led to the underside of the ferrule 42 and the ends 64a of the three extending pieces 64 are stitched together such that the respective inflator openings 66 and the bolt insertion holes 68 agree with each other.

In mounting the rectifier cloth 60 to the ferrule 42, the ferrule 42 is let into the space surrounded by the three extending pieces 64 from the side of the one remaining extending piece 64 and is agreed with the rim of the inflator opening 66 at the innermost end 64a, with the stud bolts 44 of the ferrule 42 inserted into the bolt insertion holes 68 at the end 64a of the stitched three-layer pieces. Then the one remaining extending piece 64 is led to the underside of the ferrule 42 and put to the underside of the end 64a of the three-layer pieces, with the stud bolts 44 of the ferrule 42 inserted into the bolt insertion holes 68 at the end 64a.

Through such process steps, the rectifier cloth 60 can be mounted to the ferrule 42 relatively easily.

The ends 64a of the extending pieces 64 are retained by the ferrule 42, so that a vent hole 70 is formed between the adjacent extending pieces 64. As shown in Fig. 4, the vent holes 70 are disposed so as to face the communication openings 27 provided at the rear end (the rear end of the first chamber 1) of the inner panel 22 which partitions the airbag 10A into the first chamber 1 and the second chamber 2, which communicate the first chamber 1 and the second chamber 2 with each other.

Referring to Fig. 5, the side of each extending piece 64 of this embodiment is in the form of an arc that curves substantially toward the center of the central part 62. Accordingly, each vent hole 70 surrounded by the respective sides of the extending pieces 64 is shaped in a substantially circular opening, as shown in Figs. 4 and 6.

The process steps of the airbag system including the airbag 10A are the same as those of the embodiment of Figs. 1 to 3, except that the rectifier cloth 60 is mounted to the ferrule 42 in advance.

In the airbag 10A with such a structure, when the inflator 36 emits gas in the space surrounded by the rectifier cloth 60, the gas from the inflator 36 is led into the first chamber 1 through the vent holes 70 which face the communication openings 27 for the first chamber 1 and the second chamber 2. Briefly, the gas from the inflator 36 is guided into the communication openings 27 through the vent holes 70. The gas from the inflator 36 can therefore flow into the second chamber 2 through the communication openings 27 extremely efficiently. This allows the second chamber 2 to be inflated more quickly.

Although in this embodiment all the vent holes 70 are disposed so as to face the communication openings 27 for the first chamber 1 and second chamber 2, there may be a vent hole that does not face the communication opening 27. In this case, the inflation speed of the first chamber 1 and the second chamber 2 can easily be controlled by adjusting the opening area of each vent hole as appropriate.

It is to be understood that in the invention the means for guiding the gas from the inflator into the communication openings for the first chamber 1 and the second chamber 2 is not limited to that shown in the drawings but may have a structure other than the rectifier cloth. For example, the gas from the inflator may be guided into the communication openings through a duct (pipe).

Although the foregoing embodiments are applications of the invention to a driver-seat airbag and a driver-seat airbag system, it should also be understood that the invention can also be applied to other various airbags and airbag systems.

## Claims

1. An airbag inflatable with gas from a gas generator, comprising a front panel (12) disposed at a position adjacent to an occupant and a rear panel (14) disposed at a position opposite to the occupant, the rims of the front panel (12) and the rear panel (14) being joined together,
the rear panel (14) having an opening (16) for the gas generator (36) in the center thereof,
the interior of the airbag (10; 10A) is partitioned into a central first chamber (1) and a second chamber (2) surrounding the first chamber (1) by an inner panels (22),
the inner panel (22) having an opening (24) disposed substantially concentrically with the opening (16) of the rear panel (14),
the rim at the end of the inner panel (22) connecting to the central part between the center and the rim of the front panel (12) wherein
the inner panel (22) has communication openings (27) at the rear end, for communicating the first chamber (1) and the second chamber (2) with each other,
the communication openings (27) being disposed on the extension of the issuing direction of gas from the gas generator (36), with the airbag in an inflated state,
the rear panel (14) has vent holes (18), and the inner pane (22) has inner vent holes (28) communicating the first chamber (1) and the second chamber (2) with each other, **characterized in that**
the first chamber (1) comprises guide means (60) for guiding the gas from the gas generator (36) into the communication openings (27), and **in that** the guide means (60) comprises vent holes (70) facing the communication openings (27) of the inner panel (22).

2. The airbag according to claim 1, wherein the guide means (60) is fixed to a retainer (30) by a ferrule (42).

3. The airbag according to claim 1 or 2, wherein the guide means comprises a rectifier cloth (60), said the rectifier cloth (60) includes a central part (62) covering the end of the gas generator (36) inserted into the first chamber (1) of the airbag (10A) from the occupant side and four extending pieces (64) extending from the central part (62) in four directions.

4. The airbag according to claim 3, wherein the two adjacent extending pieces (64) intersect at right angles and are led to the underside of the ferrule (42) so that the vent holes (70) are formed between adjacent pieces (64).

5. The airbag according to claim3 or 4, wherein the rims of the openings (16, 24) in the rear panel (14) and in the inner panel (22) and the extending pieces (64) of the rectifier cloth (60) are retained to the rim of a mounting hole (32) for the gas generator by the ferrule (42).

6. An airbag system comprising an airbag (10) according to one of claims 1 to 5, and a gas generator (36) having a gas port (36a), at least the end of the gas generator (36) being disposed in the airbag (10) and the gas port (36a) being disposed in the airbag, wherein
the communication openings (27) are disposed on the extension of the issuing direction of gas from the gas generator (36) with the airbag (10) in an inflated state.

7. The airbag system according to claim 6, wherein
the gas port (36a) is disposed in multiple positions,
the communication openings (27) are disposed on the extension of the issuing direction of gas from part of the gas ports (36a) with the airbag (10) in an inflated state; and
the panel part of the inner panel (22) is present on the extension of the issuing direction of gas from the remaining gas ports (36a).

8. The airbag system according to claim 6 or 7, wherein upon activation of the gas generator (36) the first chamber (1) and the second chamber (2) are inflated substantially at the same time.

## Patentansprüche

1. Airbag, der durch Gas aus einem Gasgenerator aufblasbar ist, mit einer Vorderwand (12) an einer an einen Insassen angrenzenden Position und einer Rückwand (14) an einer dem Insassen abgewandten Position, wobei die Ränder der Vorderwand (12) und der Rückwand (14) miteinander verbunden sind,
die Rückwand (14) eine Öffnung (16) für den Gasgenerator (36) in ihrer Mitte aufweist,
der Innenraum des Airbags (10; 10A) in eine mittige erste Kammer (1) und eine die erste Kammer (1) umgebende zweite Kammer (2) durch eine Innenwand (22) unterteilt ist,
die Innenwand (22) eine Öffnung (24) hat, die im Wesentlichen konzentrisch zu der Öffnung (16) der Rückwand (14) angeordnet ist,
der Rand an dem Ende der Innenwand (22) mit dem mittigen Teil zwischen der Mitte und dem Rand der Vorderwand (12) verbunden ist, wobei
die Innenwand (22) Verbindungsöffnungen (27) an dem hinteren Ende zum Verbinden der ersten Kammer (1) und der zweiten Kammer (2) miteinander hat,
die Verbindungsöffnungen (27) auf der Verlängerung der Ausgaberichtung von Gas aus dem Gasgenerator (36) im aufgeblasenen Zustand des Airbags angeordnet sind;
die Rückwand (14) Entlüftungslöcher (18) hat und die Innenwand (22) Innenentlüftungslöcher (28) hat, die die erste Kammer (1) und die zweite Kammer (2) miteinander verbinden,
**dadurch gekennzeichnet, dass**
die erste Kammer (1) eine Führungseinrichtung (60) aufweist, um das Gas aus dem Gasgenerator (36) in die Verbindungsöffnungen (27) zu führen, und dass die Führungseinrichtung (60) Entlüftungslöcher (70) aufweist, die den Verbindungsöffnungen (27) der Innenwand (22) gegenüberliegen.

2. Airbag nach Anspruch 1, wobei die Führungseinrichtung (60) an einem Halter (30) durch einen Ring (42) befestigt ist.

3. Airbag nach Anspruch 1 oder 2, wobei die Führungseinrichtung ein Ausrichtungstuch (60) aufweist, wobei das Ausrichtungstuch (60) ein mittiges Teil (62), das das Ende des in die erste Kammer (1) der Airbags (10A) von der Insassenseite her eingeführten Gasgenerators (36) abdeckt, und vier Verlängerungsstücke (64) aufweist, die sich aus dem mittigen Teil (62) in vier Richtungen erstrecken.

4. Airbag nach Anspruch 3, wobei die zwei sich benachbart erstreckenden Stücke (64) sich in rechten Winkeln schneiden und der Unterseite des Rings (42) so zugeführt sind, so dass die Entlüftungslöcher (70) zwischen benachbarten Stücken (64) ausgebildet werden.

5. Airbag nach Anspruch 3 oder 4, wobei die Ränder der Öffnungen (16, 24) in der Rückwand (14) und in der Innenwand (22) und die Verlängerungsstücke (64) des Ausrichtungstuches (60) an dem Rand eines Befestigungsloches (32) für den Gasgenerator durch den Ring (42) festgehalten werden.

6. Airbagsystem mit einem Airbag (10) gemäß einem der Ansprüche 1 bis 5 und einem Gasgenerator (36) mit einem Gasauslass (36a), wobei wenigstens das Ende des Gasgenerators (36) in dem Airbag (10) angeordnet ist und der Gasauslass (36a) in dem Airbag angeordnet ist, wobei die Verbindungsöffnungen (27) auf der Verlängerung der Ausgaberichtung des Gases aus dem Gasgenerator (36) in einem aufgeblasenen Zustand des Airbags (10) angeordnet sind.

7. Airbagsystem nach Anspruch 6, wobei der Gasauslass (36a) in mehreren Positionen angeordnet ist,
die Verbindungsöffnungen (27) auf der Verlängerung der Ausgaberichtung des Gases von einem Teil der Gasauslässe (36a) innerhalb des Airbags (10) in einem aufgeblasenen Zustand angeordnet sind; und
der Wandabschnitt der Innenwand (22) auf der Verlängerung der Ausgaberichtung des Gases aus den restlichen Gasauslässen (36a) angeordnet ist.

8. Airbagsystem nach Anspruch 6 oder 7, wobei nach der Aktivierung des Gasgenerators (36) die erste Kammer (1) und die zweite Kammer (2) im Wesentlichen gleichzeitig aufgeblasen werden.

## Revendications

1. Coussin de sécurité gonflable avec du gaz en provenance d'un générateur de gaz, comprenant un panneau avant (12) disposé dans une position adjacente à celle d'un occupant et un panneau arrière (14) disposé dans une position opposée à celle de l'occupant, les bords du panneau avant (12) et du panneau arrière (14) étant reliés,
le panneau arrière (14) ayant une ouverture (16) pour le générateur de gaz (36) au centre de celui-ci,
l'intérieur du coussin de sécurité gonflable (10 ; 10A) est cloisonné dans une première chambre centrale (1) et une seconde chambre (2) environnant la première chambre (1) par un panneau intérieur (22),
le panneau intérieur (22) ayant une ouverture (24) disposée essentiellement de façon concentrique à l'ouverture (16) du panneau arrière (14),
le bord à l'extrémité du panneau intérieur (22) raccordant à la partie centrale entre le centre et le bord du panneau avant (12) dans lequel
le panneau intérieur (22) a des ouvertures de communication (27) à l'extrémité arrière, servant à faire communiquer la première chambre (1) et la seconde chambre (2) l'une avec l'autre,
les ouvertures de communication (27) étant disposées sur l'extension de la direction émettrice du gaz en provenance du générateur de gaz (36) avec le coussin de sécurité gonflable dans un état gonflé,
le panneau arrière (14) a des trous d'aération (18), et le panneau intérieur (22) a des trous d'aération intérieurs (28) faisant communiquer la première chambre (1) et la seconde chambre (2) l'une avec l'autre, **caractérisé en ce que**
la première chambre (1) comprend un moyen de guidage (60) servant à guider le gaz en provenance du générateur de gaz (36) dans les ouvertures de communication (27),
et **en ce que** le moyen de guidage (60) comprend des trous d'aération (70) faisant face aux ouvertures de communication (27) du panneau intérieur (22).

2. Coussin de sécurité gonflable selon la revendication 1, dans lequel le moyen de guidage (60) est fixé à un arrêtoir (30) par une virole (42).

3. Coussin de sécurité gonflable selon la revendication 1 ou 2, dans lequel le moyen de guidage comprend un tissu redresseur (60), ledit tissu redresseur (60) comprend une partie centrale (62) couvrant l'extrémité du générateur de gaz (36) inséré dans la première chambre (1) du coussin de sécurité gonflable (10A) depuis le côté de l'occupant et quatre pièces d'extension (64) s'étendant de la partie centrale (62) dans quatre directions.

4. Coussin de sécurité gonflable selon la revendication 3, dans lequel les deux pièces d'extension (64) adjacentes se croisent à angles droits et sont menées au dessous de la virole (42) de sorte que les trous d'aération (70) sont formés entre les pièces adjacentes (64).

5. Coussin de sécurité gonflable selon la revendication 3 ou 4, dans lequel les bords des ouvertures (16, 24) dans le panneau arrière (14) et dans le panneau intérieur (22) et les pièces d'extension (64) du tissu redresseur (60) sont retenus au bord d'un trou de montage (32) pour le générateur de gaz par la virole (42).

6. Système de coussin de sécurité gonflable comprenant un coussin de sécurité gonflable (10) selon l'une quelconque des revendications 1 à 5 et un générateur de gaz (36) ayant un orifice de gaz (36a), au moins l'extrémité du générateur de gaz (36) étant disposée dans le coussin de sécurité gonflable (10) et l'orifice de gaz (36a) étant disposé dans le coussin de sécurité gonflable, dans lequel
les ouvertures de communication (27) sont disposées sur l'extension de la direction émettrice du gaz en provenance du générateur de gaz (36) avec le coussin de sécurité gonflable (10) dans un état gonflé.

7. Système de coussin de sécurité gonflable selon la revendication 6, dans lequel
l'orifice de gaz (36a) est disposé dans des positions multiples,
les ouvertures de communication (27) sont disposées sur l'extension de la direction émettrice du gaz en provenance d'une partie des orifices de gaz (36a) avec le coussin de sécurité gonflable (10) dans un état gonflé ; et
la partie de panneau du panneau intérieur (22) est présente sur l'extension de la direction émettrice du gaz en provenance des orifices de gaz restants (36a).

8. Système de coussin de sécurité gonflable selon la revendication 6 ou 7, dans lequel sur activation du générateur de gaz (36) la première chambre (1) et la seconde chambre (2) sont gonflées sensiblement en même temps.
